(19) Europäisches Patentamt
European Patent Office
Office européen des brevets

(11) Publication number: 0 002 091
B1

(12) # EUROPEAN PATENT SPECIFICATION

(45) Date of publication of patent specification: 10.06.81

(51) Int. Cl.³: A 01 N 37/34, C 07 C 121/75

(21) Application number: 78200302.4

(22) Date of filing: 13.11.78

(54) **Method of controlling acarid pests by means of cyclopropane carboxylate esters, the use of such esters as an acaricide, and one of said esters as a novel compound.**

(30) Priority: 22.11.77 GB 4858977

(43) Date of publication of application: 30.05.79 Bulletin 79/11

(45) Publication of the grant of the European patent: 10.06.81 Bulletin 81/23

(84) Designated Contracting States: CH DE FR GB NL

(56) References cited:
FR - A - 2 240 914
FR - A - 2 341 307

JOURNAL OF THE CHEMICAL SOCIETY 1975, pages 1865—1868

NATURE, vol. 248, pages 710 and 711, (1974).

(73) Proprietor: SHELL INTERNATIONALE RESEARCH MAATSCHAPPIJ B.V.
Carel van Bylandtlaan 30
NL-2596 HR DEN HAAG (NL)

(72) Inventor: Badmin, John Stewart
26 Arundel Avenue
Sittingbourne Kent (GB)
Inventor: Davies, John Hugh
53 New Dover Road
Canterbury Kent (GB)

(74) Representative: Keuzenkamp, Abraham et al,
P.O. Box 302
NL-2501 CH Den Haag (NL)

EP 0 002 091 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Method of controlling acarid pests by means of cyclopropane carboxylate esters, the use of such esters as an acaricide, and one of said esters as a novel compound

This invention relates to a method of controlling acarid pests by means of certain isomers of cyclopropane carboxylate ester; the invention also relates to a novel isomer employed therein.

Cyclopropane carboxylate esters of the so-called "synthetic pyrethroid" type are now established as agricultural insecticides and examples of such compounds can be found in UK Patent No. 1,413,491 which claims, inter alia, insecticidally-active compounds of the following formula:—

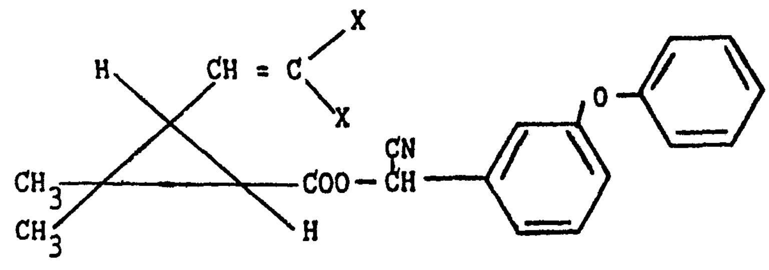

(I)

wherein X is chlorine, fluorine or bromine. Whilst these compounds are exceedingly active against insects, especially Spodoptera and Lepidoptera, there has been no reported activity against the order of ACARINA, i.e. against acarids, for example *Tetranychus urticae* the glasshouse red spider mite.

The Applicant has now found that certain isomers of a pyrethroid compound possess remarkable activity against acarids.

Accordingly the present invention provides a method of controlling acarids characterized in that an ester represented by the following general formula is applied to the acarids or their habitat:

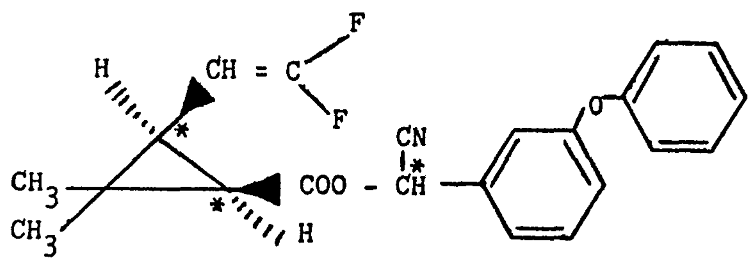

(II)

wherein the asterisks indicate asymmetric carbon atoms, the acid portion of the ester molecule is in the [1R, cis]-configuration, and the alcohol portion of the molecule is in the [S]-configuration or the [RS]-configuration.

In other words, the acaricidally-active entities used in the method according to the invention are:—

(i) [S]-alpha - cyano - 3 - phenoxybenzyl [1R, cis] - 2(2,2 - difluorovinyl) - 3,3 - dimethylcyclopropanecarboxylate (hereinafter referred to as ISOMER (i); or

(ii) [R,S] - alpha - cyano - 3 - phenoxybenzyl [1R, cis] - 2 - (2,2 - difluorovinyl) - 3,3 - dimethylcyclopropanecarboxylate (i.e. a mixture in any proportions of ISOMER (i) and its corresponding [R] - isomer: hereinafter referred to as COMPOUND (ii).

It will be seen that the acid portion of the ester of Formula II has two asymmetric carbon atoms and that it represents one isomer of the four possible stereoisomers having the same formula. The nomenclature used to describe the spatial configuration of this one isomeric form of the acid portion is the so-called Elliott nomenclature as given in M. Elliott, A. W. Farnham, N. F. Janes, P. H. Needham and D. A. Pulman, Nature, 1974, *248*, 710.

Also it will be seen that the alcohol portion of the ester of Formula II possesses a single asymmetric carbon atom and can exist in either the [R], or [RS] form where the "R" and "S" nomenclature for defining spatial configuration is the absolute nomenclature of R. S. Cahn, C. Ingold, and V. Prelog, Angewandte Chemie (int. ed.) 1966, *5*, 385.

The manufacture of COMPOUND (ii) (i.e. the mixture of ISOMER (i) with its [R]-isomer) may be achieved by the methods used in Elliot, M.; Farnham, A. W.; Janes, N. F.; Needham, P. H. and Pulman, D. A. *Pesticide Science* 1975, 6, 537—542. Thus (1R, cis)-caronaldehyde ester may be reacted under Wittig conditions with sodium chlorodifluoroacetate to give (1R, cis)-2-(2,2-difluorovinyl)-3,3-dimethylcyclopropanecarboxylate ester which may be converted to the desired ester with alpha-cyano-3-phenoxybenzyl alcohol to give COMPOUND (ii).

The isolation of ISOMER (i) from COMPOUND (ii) may be achieved by any convenient isomer

separation technique, for example a crystal of the desired single isomer may be isolated from the mixture of the two isomers by high pressure liquid chromatography and this crystal may be used to "seed" the crystallization of the desired isomer from a solution of COMPOUND (ii) in a convenient solvent. The ISOMER (i) is a novel compound and is claimed as such.

The applied dosage of the acaricidally-active ingredient will of course depend on the prevailing conditions but dosages in the range 0.01 to 3 kg/ha, preferably in the range 0.05 to 1.0 kg/ha generally give effective acarid pest control without producing any harmful effects on the crop plants on which the acarids usually live and multiply.

The acaricidally active ingredient can, of course, be applied directly to the acarid or its habitat but, as is normal practice in the agrochemical industry, it is applied in the form of a composition which includes the active compound, a carrier, or a surface-active agent or both a carrier and a surface-active agent.

The term "carrier" as used herein means a material, which may be inorganic or organic and of synthetic or natural origin, with which the active compound is mixed or formulated to facilitate its application to water or its storage, transport or handling. The carrier may be a solid or a fluid. Any of the material usually applied in formulating pesticides may be used as carrier.

Suitable solid carriers are natural and synthetic clays and silicates for example natural silicas such as diatomaceous earths; magnesium silicates, for example, talcs; magnesium aluminium silicates, for example, attapulgites and vermiculites; aluminium silicates, for example, kaolinites, montmorillinites and micas; calcium carbonates; calcium sulphate; synthetic hydrated silicon oxides and synthetic calcium or aluminium silicates; elements such as for example, carbon and sulphur; natural and synthetic resins such as for example, coumarone resins, polyvinyl chloride and styrene polymers and copolymers; solid polychlorophenols; bitumen; waxes such as for example, beeswax, paraffin wax, and chlorinated mineral waxes; and solid fertilisers, for example superphosphates.

Examples of suitable fluid carriers are water, alcohols, such as for example, isopropanol or a glycol; ketones such as for example, acetone, methyl ethyl ketone, methyl isobutyl ketone and cyclohexanone; ethers; aromatic hydrocarbons such as for example, toluene and xylene; petroleum fractions such as for example, kerosine, light mineral oils; chlorinated hydrocarbons, such as for example, carbon tetrachloride, perchloroethylene, trichloroethane, including liquefied normally vaporous gaseous compounds. Mixtures of different liquids are often suitable.

The surface-active agent may be an emulsifying agent or a dispersing agent or a wetting agent; it may be nonionic or ionic. Any of the surface-active agents usually applied in formulating herbicides or insecticides may be used. Examples of suitable surface-active agents are the sodium or calcium salts of polyacrylic acids and lignin sulphonic acids; the condensation products of fatty acids or aliphatic amines or amides containing at least 12 carbon atoms in the molecules with ethylene oxide and/or propylene oxide; fatty acid esters of glycerol, sorbitan, sucrose or pentaerythritol condensates of these with ethylene oxide and/or propylene oxide; condensation products of fatty alcohols or alkyl phenols for example *p*-octylphenol or *p*-octylcresol, with ethylene oxide and/or propylene oxide; sulphates or sulphonates of these condensation products; alkali or alkaline earth metal salts, preferably sodium salts of sulphuric or sulphonic acid esters containing at least 10 carbon atoms in the molecule, for example, sodium lauryl sulphates, sodium secondary alkyl sulphates, sodium salts of sulphonated castor oil, and sodium alkylaryl sulphonates such as sodium dodecylbenzene sulphonate; and polymers of ethylene oxide and copolymers of ethylene oxide and propylene oxide.

The compositions used in this invention may be formulated as wettable powders, dusts, granules, pellets, solutions, emulsifiable concentrates, emulsions or suspension concentrates. Wettable powders are usually compounded to contain 25, 50 or 75% w of toxicant and usually contain, in addition to solid carrier, 3—10% w of a dispersing agent and, where necessary, 0.10% w of stabiliser(s) and/or other additives such as penetrants or stickers. Dusts are usually formulated as a dust concentrate having a similar composition to that of a wettable powder but without a dispersant, and are diluted in the field with further solid carrier to give a composition usually containing $\frac{1}{2}$—10% w of toxicant. Granules are usually prepared to have a size between 10 and 100 BS mesh, and may be manufactured by agglomeration or impregnation techniques. Generally, granules will contain $\frac{1}{2}$—25% w toxicant and 0.10% w of additives such as stabilisers, slow release modifiers and binding agents, whereas pellets which are normally extrudates have a similar composition but are larger in size, e.g. 0.25—2.5 cms long and 0.1 to 0.6 cms in diameter. Emulsifiable concentrates usually contain, in addition to the solvent and, when necessary, co-solvent, 10—15% w/v toxicant, 2—20% w/v emulsifiers and 0—20% w/v of appropriate additives such as stabilisers, penetrants and corrosion inhibitors. Suspension concentrates are compounded so as to obtain a stable, non-sedimenting, flowable product and usually contain 10—75% w toxicant, 0.5—15% w of dispersing agents, 0.1—10% w of suspending agents such as protective colloids and thixotropic agents, 0—10% w of appropriate additives such as defoamers, corrosion inhibitors, stabilisers, penetrants and stickers, and as carrier, water or an organic liquid in which the toxicant is substantially insoluble; certain organic solids or inorganic salts may be dissolved in the carrier to assist in preventing sedimentation or as antifreeze agents for water.

The compositions for use in the method according to the invention may contain other ingredients, for example, protective colloids such as gelatin, glue, casein, gums, cellulose ethers, and polyvinyl

alcohol; thixotropic agents e.g. bentonites and sodium polyphosphates; stabilisers such as ethylene diamine tetra-acetic acid, urea and triphenyl phosphate; other acaricides or pesticides; and stickers, for example non-volatile oils.

The reported pesticidal activity for the synthetic pyrethroids is confirmed to their insecticidal activity and the absence of references to acaricidal activity emphasises the general lack of this type of activity which has hitherto been found amongst the synthetic pyrethroids. Surprisingly the Applicant has found that Compounds of the general formula II are remarkably active against acarids, being many times more active than a commercial acaricide.

The method according to the invention and the preparation of the novel compound used therein are illustrated by the following Examples.

Example I Acaricidal Activity Tests

The active ingredients used in the method according to the invention as well as other chemically-related compounds were tested against glasshouse red spider mites, *Tetranychus urticae* (T.u.).

The compounds were formulated as solutions or suspensions in water containing 20% by weight of acetone and 0.05% by weight of Triton X100 as wetting agent. The formulations contained 0.4% by weight of the compound to be tested. Leaf discs cut from French bean plants were held on moist filter paper placed on a lid inside a waxed carton. The discs were then sprayed using a logarithmic spraying machine, allowed to dry, and then infested with 10 adult mites. The discs were held under glasshouse conditions and, after 24 hours, the percentage of dead and moribund mites were assessed.

The concentration of material expected to kill 50% of the test species was calculated ($LC_{50}$) and the toxicity of the compound was compared with that of the standard (parathion) and expressed as a Toxicity Index (T.I.)

$$\text{Toxicity Index} = \frac{LC_{50}\text{ of standard}}{LC_{50}\text{ of test compound}} \times 100$$

The $LC_{50}$ used for the standard in this calculation was the mean value based on 20 determinations. The results are given in Table I.

TABLE I

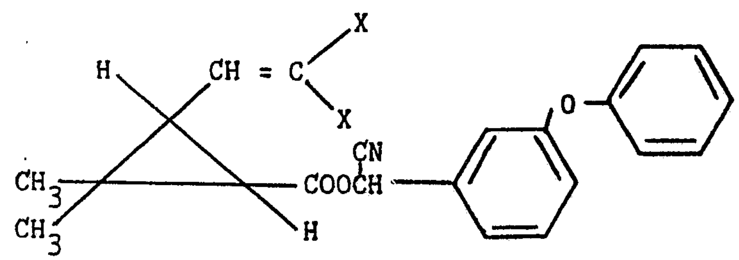

| Compound Reference | Compound under Test | | | | Toxicity Index against T.u. |
|---|---|---|---|---|---|
| | X | Stereochemistry of acid portion | Stereochemistry of alcohol portion | No. of Stereoisomers present | |
| ISOMER (i) | F | IR, cis | S | 1 | 316 |
| COMPOUND (ii) | F | IR, cis | RS | 2 | 120 |
| COMPOUND A | F | IR trans | RS | 2 | 9 |
| COMPOUND B | F | IR IS, cis | RS | 4 | 47 |
| COMPOUND C | F | IR, IS, cis /trans | RS | 8 | 7 |
| COMPOUND D | Cl | IR, cis | RS | 2 | 3 |
| COMPOUND E | Cl | IR, IS, cis /trans | RS | 8 | 5 |
| COMPOUND F | Br | IR, cis | RS | 2 | 4 |
| COMPOUND G | Br | IR, cis | S | 1 | 3 |
| COMPOUND H | alpha-cyano-3-phenoxybenzyl alpha-isopropyl-4-chlorophenylacetate | | | | 3 |
| COMPOUND I | hexakis(2-methyl-2-phenylpropyl)-di-stannoxane | | | | 7 |

Notes

(a) COMPOUND E is a commercially-available pyrethroid whose common name is cypermethrin.
(b) COMPOUND G is a commercially-available pyrethroid whose common name is decamethrin.
(c) COMPOUND H is a commercially-available pyrethroid whose common name is fenvalerate.
(d) COMPOUND I is a commercially-available acaricide whose common name is fenbutatin oxide.

The results from Table I clearly indicate that the active ingredients, ISOMER (i), and COMPOUND (ii) both possess remarkably superior acaricidal activity over:—

(1) the sterically-related compounds A, B and C;
(2) the chemically-related compounds D, E, F and G;
(3) a commercial pyrethroid, COMPOUND H; and
(4) a commercial acaricide, COMPOUND I.

Example II Preparation of [S]-alpha-cyano-3-phenoxybenzyl[1R, cis]-2-(2,2-difluorovinyl)-3,3-dimethylcyclopropanecarboxylate

[RS] - alpha - cyano - 3 - phenoxybenzyl [1R, cis] - 2 - (2,2 - difluorovinyl) - 3,3 - dimethylcyclopropane carboxylate was prepared according to the method described by Elliott, M.; Farnham, A. W.; Janes, N. F.; Needham, P. H.; and Pulman D. A., Pesticide Science, 1975, 6, 537—542.

[S] - alpha - cyano - 3 - phenoxybenzyl [1R, cis] - 2 - (2,2 - difluorovinyl) - 3,3 - dimethylcyclopropane carboxylate was separated as a crystalline solid from its corresponding [R]-isomer by means of high pressure liquid chromatography.

**Claims**

1. A method of controlling acarids characterized in that an ester represented by the following general formula is applied to the acarids or their habitat:

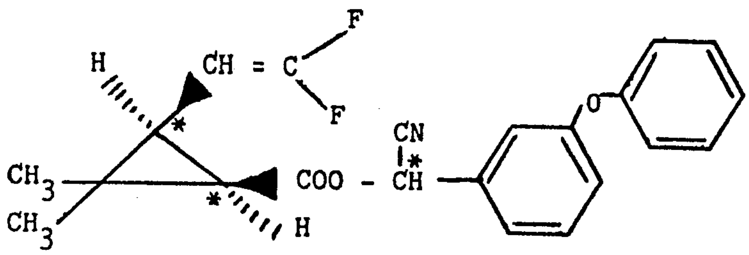

(II)

wherein the asterisks indicate asymmetric carbon atoms, the acid portion of the ester molecule is in the [1R, cis]-configuration, and the alcohol portion of the molecule is in the [S]-configuration or the [RS]-configuration.

2. A method according to claim 1 characterized in that the ester of formula II is applied in the range 0.01 to 3 kilogrammes per hectare.

3. The use as an acaricide of the ester of formula II.

4. [S] - alpha - cyano - 3 - phenoxybenzyl [1R, cis] - 2 - (2,2 - difluorovinyl) - 3,3 - dimethylcyclopropanecarboxylate.

**Revendications**

1. Une méthode de lutte contre les acariens, caractérisée en ce qu'on applique aux acariens ou à leur habitat un ester représenté par la formule générale suivante:

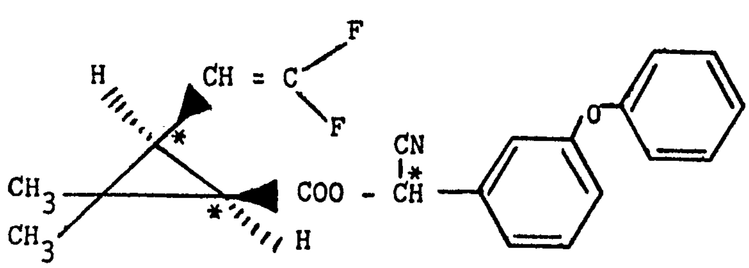

(II)

dans laquelle les astérisques indiquent des atomes de carbone asymétriques, la portion acide de la molécule d'ester est dans la configuration (1R,cis) et la portion alcool de la molécule est dans la configuration (S) ou la configuration (RS).

2. Une méthode selon la revendication 1, caractérisée en ce qu'on applique l'ester de formule II à raison de 0,01 à 3 kilogrammes par hectare.

3. L'utilisation comme acaricide de l'ester de formule II.

4. Le (S) - alpha - cyano - 3 - phénoxybenzyl (1R,cis) - 2 - (2,2 - difluorovinyl) - 3,3 - diméthylcyclopropanecarboxylate.

## Patentansprüche

1. Ein Verfahren zur Bekämpfung von Acariden, dadurch gekennzeichnet, dass ein Ester der allgemeinen Formel:

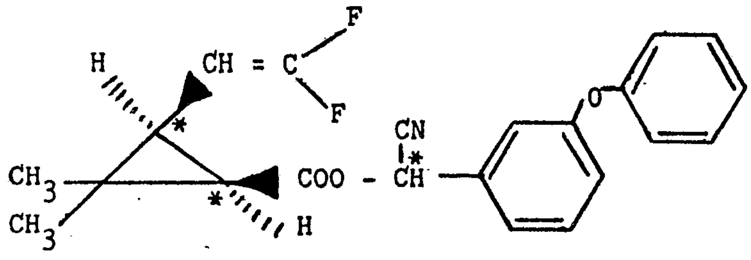

(II)

in der die * asymmetrische Kohlenstoffatome bezeichnen, der Säureteil des Estermoleküls in [1R,cis]-Konfiguration und der Alkoholteil des Moleküls in der [S]-Konfiguration oder in der [RS]-Konfiguration ist, auf die Acariden oder den Ort ihres Vorkommens angewandt wird.

2. Ein Verfahren nach Anspruch 1, dadurch gekennzeichnet, dass der Ester der Formel (II) in einem Verhältnis von 0,01 bis 3 kg/ha angewandt wird.

3. Die Verwendung der Ester der Formel (II) als ein Acaricid.

4. [S] - $\alpha$-Cyano - 3 - phenoxybenzyl - [1R,cis] - 2 - (2,2 - difluorovinyl) - 3,3 - dimethylcyclopropancarboxylat.